# EUROPEAN PATENT APPLICATION

(11) **EP 4 708 496 A1**
(43) Date of publication of application: **11.03.2026**
(21) Application number: 25200028.6
(22) Date of filing: 03.09.2025
(51) Int. Cl.: H01M 50/209, H01M 50/264, H01M 50/267

(54) **ELECTRICAL CELL MODULE, AND A METHOD OF ASSEMBLING AN ELECTRICAL CELL MODULE**

(30) Priority: 06.09.2024 GB 202413112
(71) Applicant: Fortescue Zero Limited, Kidlington, England OX5 1GB (GB)
(72) Inventor: STANTON, Philip, Oxford, OX5 1GB (GB); VESMA, Nathan, Oxford, OX5 1GB (GB)
(74) Representative: HGF

(57) **Abstract**

The present invention relates to an electrical cell module, particularly an electrical cell module including at least two cell stacks. A method of manufacturing the electrical cell module is also disclosed. The electrical cell module comprises: an opposing pair of module end plates spaced apart from one another along a longitudinal axis; a first cell stack; and a second cell stack. Each of the first cell stack and second cell stack comprises: a series of cells stacked along the longitudinal axis, and a pair of stack end plates, arranged at opposing ends of the series of cells, and configured to be fixed to one another in an assembled position. In the assembled position, the pair of stack end plates apply to the series of cells a compressive force along the longitudinal axis, and define a stack length of the respective cell stack. The compressive force applied to the first cell stack and the compressive force applied to the second cell stack are each within a predetermined operable range. The electrical cell module is configured so that each of the opposing pair of module end plates is fixedly engaged, in a use position, with one corresponding stack end plate of each of the first cell stack and the second cell stack. In the use position the module end plates are spaced apart from one another along the longitudinal axis by a predetermined distance, and the first stack length is different to the second stack length.

## Description

### TECHNICAL FIELD

The present invention relates to an electrical cell module, particularly an electrical cell module including at least two cell stacks. A method of manufacturing the electrical cell module is also disclosed.

### BACKGROUND

Energy storage systems, including electrical cell modules incorporating multiple individual cells, are used in a variety of applications including electric vehicles. A basic unit of an electrical storage system is a cell, also known as a battery or a battery cell. Cells are typically one of three common formats: pouch, prismatic or cylindrical, depending on the shape and characteristics of the cell body. The cell body houses an electrochemical system for storing energy. As used herein, prismatic cells may also include pouch cells that are mounted within a cell body, such as a frame or housing, to give a predetermined shape to the pouch cell. In this way, prismatic cells may include a cell including a rigid cell body, and cell terminals for extracting charge from the cell.

It is known for a series of cells to be collectively mounted within a frame to provide a cell stack. A cell stack has a stack length including the total of the thicknesses of all of the cells within the cell stack.

Known electrical cell modules may be mounted indirectly to a vehicle chassis within a housing unit in order to enclose the electrical cell module and provide protection. In certain examples, the housing unit also provides space to enclose other electrical systems such as power inverters, fuses and safety components, power distributors, or systems for monitoring performance of the electrical cell module. Consequently, any variation in the stack length increases leads to a poor fit for a cell stack within the space allocated for within the electrical cell module or within the vehicle chassis.

Known methods for manufacturing cells lead to a range tolerances in dimensions of the cell bodies. Typically, cells each have a tolerance on its thickness of around +/-0.3mm such that, for example, cell stacks formed of 12 cells together will have an aggregate tolerance, that is variance in stack length, of around +/-3.6mm. The aggregate tolerance means that cell stacks with significant numbers of cells, for example 10 or more, have an inherent risk of a poor fit within the vehicle chassis or housing unit. Cell stacks that do not fit reliably to the vehicle chassis or housing unit require adaptations, increasing manufacturing costs.

In certain known examples, electrical cell module designs are generally smaller with shorter cell stacks having fewer cells, for example fewer than 10, in order that the aggregate tolerance effects are less significant. In certain known examples, cell stacks are compressed to a fixed stack length to ensure an accurate fit within the electrical cell module. However, the underlying variability in cell thickness results in a variance in the compression on the cells between cell stacks. Other known cell stacks employ compressible spacers interspersed between cells in a cell stack. The spacers each compress to different degrees to accommodate cell thickness tolerances. However, the variable compression applied to each spacer necessarily creates different compressive forces on each cell. Excess compression of a cell risks damaging the cell body, leading to leaks. Too little compression of a cell will mean the cell does not operate at optimal efficiency. Furthermore, cells may swell after repeated use meaning that any variation in compression is exacerbated as the stack is used, increasing the risks of cell over-compression and cell damage.

Some manufacturers grade cells, so that cells are measured before assembly, and minimum thickness cells are paired with maximum thickness cells to ensure a more consistent stack length. The additional time involved in grading increases manufacturing costs and necessarily increases wastage of cells that do not provide suitable combinations of cell thickness.

It is an aim of certain examples or embodiments of the present invention to solve, mitigate or obviate, at least partly, at least one of the problems and/or disadvantages associated with the prior art.

For example, it would be useful to provide an electrical cell module having multiple cell stacks, wherein every stack is a different length. That is, it would be useful for an electrical cell module to be able to accommodate multiple cell stacks, each of different stack lengths.

For example, it would also be useful to ensure that the mounting points of an electrical cell module, for mounting to a vehicle chassis or housing unit, are always positioned accurately and consistently. The mounting points of an electrical cell module should be independent of stack lengths of its cell stacks.

For example, it would be useful to create a cell stack that applies consistent, repeatable compressive force to the cells in the cell stack.

### BRIEF SUMMARY

The invention is set out in the appended claims.

According to an aspect of the invention, there is provided an electrical cell module including:
an opposing pair of module end plates spaced apart from one another along a longitudinal axis;
a first cell stack; and
a second cell stack;
wherein each of the first cell stack and second cell stack includes:
   a series of cells stacked along the longitudinal axis, and
   a pair of stack end plates, arranged at opposing ends of the series of cells, and configured to be fixed to one another in an assembled position wherein, in the assembled position, the pair of stack end plates apply to the series of cells a compressive force along the longitudinal axis, and define a stack length of the respective cell stack;
   wherein the compressive force applied to the first cell stack and the compressive force applied to the second cell stack are each within a predetermined operable range; and
   wherein the electrical cell module is configured so that, in a use position, each of the opposing pair of module end plates is fixedly engaged with one corresponding stack end plate of each of the first cell stack and the second cell stack such that:
      - the module end plates are spaced apart from one another along the longitudinal axis by a predetermined distance, and
      - the first stack length is different to the second stack length.

According to another aspect of the invention, there is provided a method of manufacturing an electrical cell module, the method including:
providing an opposing pair of module end plates;
providing a first cell stack and a second cell stack, wherein each of the first cell stack and the second cell stack includes:
   - a series of cells stacked in a longitudinal axis, and
   - a pair of stack end plates arranged at opposing ends of each series of cells;
using each pair of stack end plates to apply to the respective series of cells a compressive force in the longitudinal axis, wherein, when the compressive force on each series of cells is within a predetermined operable range, the pair of stack end plates are in an assembled position;
fixing the stack end plates of the first cell stack in the corresponding assembled position to define a first stack length;
fixing the stack end plates of the second cell stack in a corresponding assembled position to define a second stack length; and
fixedly engaging, in a use position, each of the opposing pair of module end plates to one corresponding stack end plate of each of the first cell stack and the second cell stack such that the module end plates are spaced apart from one another in the longitudinal axis by a predetermined distance.

In this way, the aspects each allow electrical cell modules with multiple cell stacks to be easily assembled with a consistent compressive force applied to the cells in each cell stack. The efficiency of the cells in the electrical cell module is improved as every cell experiences a compressive force within its operable range. The compressive force is consistent regardless of any dimensional variations in individual cells, or between each cell stack. The electrical cell module permits use of cells with an increased range of tolerances, reducing manufacturing time and decreasing wastage from cells that would otherwise not have ideal dimensions.

Furthermore, the electrical cell module is assembled to a consistent, predetermined dimensions regardless of any dimensional variations in individual cells, or between each cell stack. The electrical cell module is installed more reliably and accurately to a vehicle chassis or other component. Manufacturing time and costs are reduced.

Aptly, each of the first cell stack and the second cell stack may be any of the cell stacks described here. Each cell may be a prismatic cell. A prismatic cell may include a pouch cell located within a frame or housing unit.

Aptly, in the assembled position, each pair of stack end plates may be fixed to one another via an intermediary pair of support plates. The pair of stack end plates and the pair of support plates may cooperatively form a cell stack housing unit.

By providing support plates in this way, an electrical cell module is provided in which the support plates provide structural support to the electrical cell module. The electrical cell module utilises module end plates without any additional longitudinal components. The assembly is simplified and manufacturing costs are reduced.

Aptly, each support plate may extend along the longitudinal axis between a proximal end and a distal end portion. The proximal end portion may have a proximal guide element. The distal end portion may have a distal guide element.

Aptly, in a pre-assembled position, a first stack end plate of the pair of stack end plates may contactingly engage each proximal guide element. A second stack end plate of the pair of stack end plates may contactingly engage each distal guide element. The proximal guide elements and the distal guide elements may be each configured to guide the corresponding first stack end plate and second stack end plate towards one another along the longitudinal axis from the pre-assembled position to the assembled position.

Aptly, each of the first stack end plate and the second stack end plate may include one or more engaging elements. The one or more engaging elements may be arranged to contactingly engage the corresponding proximal guide element or distal guide element in the pre-assembled position.

Aptly, each engaging element may be a tab. Each tab may be oriented to project away from the series of cells in the cell stack.

In these ways, the stack end plates ensure a compressive force is applied to the series of cells in a simple operation. The stack end plates and the series of cells maintain alignment as the compressive force is applied.

Aptly, in the assembled position, the first stack end plate may be welded to each of the proximal guide elements and the second stack end plate is welded to each of the distal guide elements. The compressive force is therefore reliably held in place.

Aptly, each cell of the series of cells may include a perimeter wall. The perimeter wall defines a thickness of each cell in the longitudinal direction of the cell stack. The perimeter wall may include faces, each oriented in a direction of the longitudinal axis. The pair of support plates may abut opposing faces of each perimeter wall of the series of cells.

Aptly, each support plate may include at least one elongate rib. Each elongate rib of the at least one elongate rib may be configured to wrap at least partly around the perimeter wall of at least a proportion of the cells in the series of cells. Each elongate rib of the at least one elongate rib may be configured to wrap at least partly around the perimeter wall of each cell in the series of cells.

In these ways, each support plate is readily fitted onto the series of cells as the cell stack is assembled, reducing assembly time. In the pre-assembled position, the elongate rib may support the cells within the cell stack housing unit. The elongate rib maintains alignment of each cell as the cell stack is assembled.

Aptly, each elongate rib may include an adhesive layer. The adhesive layer may be configured to adhere the support plate to the perimeter wall of at least a proportion of the cells in the series of cells. The adhesive layer may be configured to adhere the support plate to the perimeter wall of each cell in the series of cells.

**In** this way, the adhesive layer further improves alignment of the cells within the cell stack. The structural integrity of the cell stack is improved, ensuring the electrical cell module is more robust in use.

Aptly, each cell stack may include a support member stacked with the series of cells. Typically, the support member is stacked between a pair of cells of the series of cells. Aptly each cell stack may include a series of support members stacked with the series of cells.

The support members provide structural support to the cell stack.

Aptly, a support member may include a registration element. The registration element may be configured to locate with a mutually-compatible locator element on one of the associated support plates. Aptly, where a cell stack includes a series of support members, only one support member of the series of support members has a registration element.

Aptly, a support member may include at least a pair of registration elements. The pair of registration elements may be provided on opposing side surfaces of the support member, to be disposed on longitudinal faces of the series of cells when stacked.

Aptly, a registration element may include a protrusion projecting in a transverse direction from the support member. Aptly, the locator element may include an aperture through the support plate configured to receivingly locate with the pin.

The support member, and associated registration element or registration elements ensure that the series of cells are accurately located with each support plate. That is, each series of cells is located relative to each support plate along the longitudinal axis of the cell stack. The series of cells are accurately registered with the support plates. Consequently, each stack end plate is mountable to the series of cells so that the engaging elements contactingly engage the guide elements of the support plates.

Aptly, the support member may include a bore extending through the support member. The bore may be a threaded bore. The bore may be oriented to extend vertically through the support member.

In this way, the bore provides an additional means of securing the electrical cell module to a fixing point provided on a support body. The electrical cell module is attachable to fixing points in at least three longitudinal positions, increasing accuracy and robustness of the fixings.

Aptly, the operable compressive force is in a range of from 10 Newtons to 10,000 Newtons. More aptly, the operable compressive force is in a range of from 10 Newtons to 100 Newtons.

Aptly, each series of cells includes at least 10 cells, at least 20 cells, or between 10 to 20 cells.

Aptly, each cell in the series of cells includes a pair of cell terminals. The pair of cell terminals may be disposed on an upper face of the cell.

Aptly, the electrical cell module may also include a busbar assembly. The busbar assembly may be configured to be mounted to the electrical cell module so as to electrically connect with each of the cell terminals of each cell stack within the electrical cell module. The busbar assembly may include a pair of module terminals for electrically connecting to each cell in the electrical cell module.

Aptly, a first module end plate and a second module end plate of the pair of module end plates may each extend in a transverse direction, perpendicular to the longitudinal axis. Each module end plate may include a series of mount portions along the transverse direction.

Aptly, in a pre-use position, the mount portions of the first module end plate may contactingly engage each of the first stack end plates. The mount portions of the second module end plate may contactingly engage each of the second stack end plates. The mount portions and the stack end plates may be each configured to guide the corresponding first module end plate and second module end plate towards one another in the longitudinal axis, from the pre-use position to the use position.

Aptly, each mount portion may include a slot configured, in the pre-use position, to receive the engaging elements of the corresponding stack end plates. The mount portion may be welded to one of the engaging elements in the use position.

Aptly, each mount portion may include a threaded bolt portion configured, in the pre-use position, to be received in an elongate slot in one of the engaging elements of the stack end plates. The threaded bolt may be clamped to one of the stack end plates in the use position.

In these ways, the mount portions assist in guiding the assembly of the electrical cell module. The risk of errors is reduced. Assembly of the electrical cell module is simplified while ensuring the dimensions of the electrical cell module are accurate to specified dimensions regardless of any dimensional variation in its cell stacks.

Each module end plate may be configured to be releasably secured to a pair of fixing points provided on a support body. The support body may be, for example a module enclosure, a vehicle chassis or a module support frame. The fixing points of the pair of fixing points may be spaced apart by the predetermined distance.

Aptly, the electrical cell module may further include at least one third cell stack including:
a series of cells stacked in the longitudinal axis, and
a pair of stack end plates, arranged at opposing ends of the series of cells, and configured to be fixed to one another in an assembled position wherein, in the assembled position, the pair of stack end plates apply to the series of cells a compressive force in the longitudinal axis, and define a third stack length;
wherein the compressive force applied to the third cell stack is within the predetermined operable range; and
wherein the electrical cell module is configured so that each of the opposing pair of module end plates is also fixedly engaged, in the use position, with one corresponding stack end plate of the third cell stack such that the module end plates are spaced apart from one another in the longitudinal axis by the predetermined distance.

Aptly, the third stack length may be different to at least one of: the first stack length or the second stack length.

In this way, the electrical cell module is adaptable to different configurations. The electrical cell module is scalable to include three, four, or more, cell stacks, each with differing stack lengths.

Aptly, the method of manufacturing an electrical cell module may include a second stack length that is different to the first stack length.

Aptly, the method may include a step of providing each of the first cell stack and the second cell stack with a respective intermediary pair of support plates, so that each pair of stack end plates and respective pair of support plates cooperatively form a stack housing unit.

Aptly, the method step of fixing the stack end plates of the respective cell stack in the assembled position may include welding the stack end plates to the associated support plates.

Aptly, the method may include a step of: contactingly engaging, in a pre-assembled position, each stack end plate of the pair of stack end plates with either a distal guide element on each of the first cell stack and the second cell stack, or with a proximal guide element on each of the first cell stack and the second cell stack. Once contactingly engaged, the corresponding first stack end plate and second stack end plate are guided towards one another along the longitudinal axis, from the pre-assembled position to the assembled position.

Aptly, the method may include that each of the first cell stack and the second cell stack includes a support member stacked with the respective series of cells. There may be a further step, prior to the step of using each pair of stack end plates to apply to the respective series of cells a compressive force in the longitudinal axis, that includes: locating each support member with the associated support plates.

### BRIEF DESCRIPTION OF THE SEVERAL VIEWS OF THE DRAWINGS

Examples will now be described further with reference to the figures in which:
FIG. 1 shows a perspective view of an example electrical cell module according to an aspect;
FIG. 2 shows a perspective view of an example cell stack of the electrical cell module of FIG. 1;
FIG. 3 shows a close up perspective view of part of the electrical cell module of FIG. 1;
FIG. 4 shows a top view of the electrical cell module of FIG. 1 with the cell stacks mounted to the module end plate in an assembled position;
FIG. 5A shows an example support member of the cell stack of FIG. 2;
FIG. 5B shows a longitudinal cross-sectional view of the cell stack of FIG. 2;
FIG. 6A shows a transverse cross-sectional view, and FIG. 6B shows a close up cross-sectional view, of the cell stack of FIG. 2;
FIG. 7A shows a perspective view of example cell stacks and threaded bolts of a second example electrical cell module according to an aspect;
FIG. 7B shows the example of FIG. 7A with one of its module end plate; and
FIG. 8 shows a lower perspective view of the electrical cell module of FIG. 7B.

### DETAILED DESCRIPTION

Certain terminology is used in the following description for convenience only and is not limiting. The words 'lower', 'upper', 'longitudinal', 'lateral' and 'transverse' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the term 'mounted' is intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

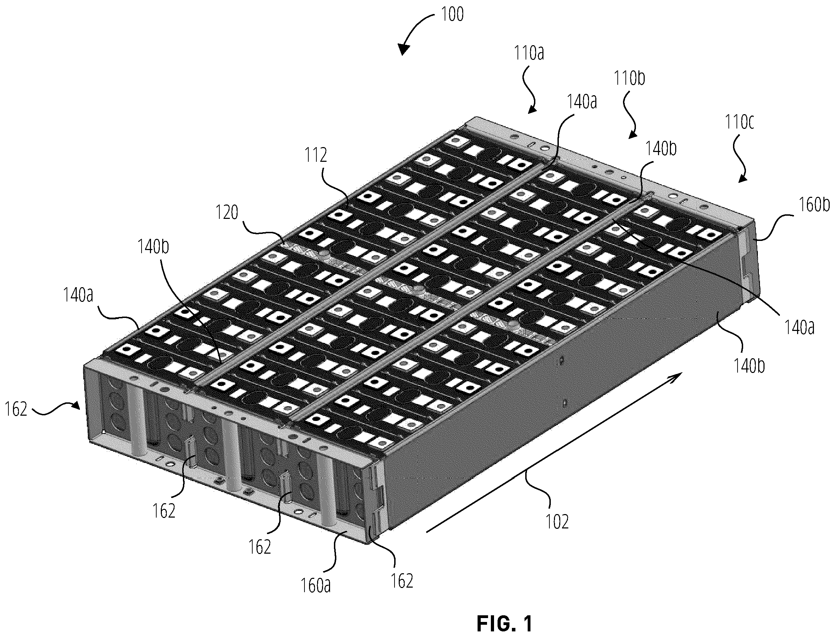

Referring now to FIG. 1 to FIG. 6B, there is shown a first example electrical cell module 100. The electrical cell module 100 includes an opposing pair of module end plates 160a, 160b spaced apart from one another along a longitudinal axis 102. The electrical cell module 100 also includes a first cell stack 110a, a second cell stack 110b, and a third cell stack 110c.

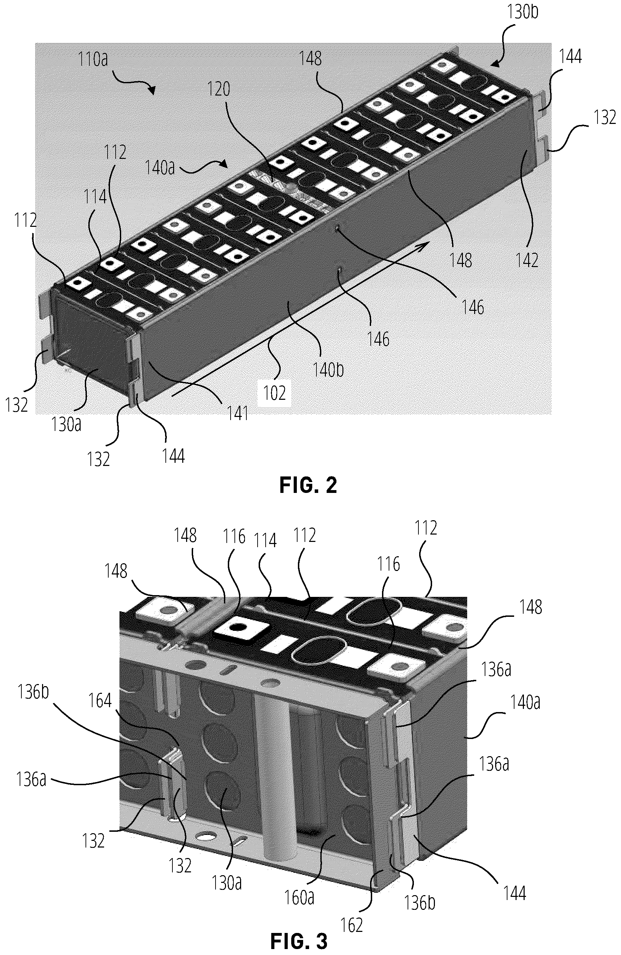

Referring particularly to FIG. 2, there is shown the first cell stack 110a representative of each of the first cell stack 110a, the second cell stack 110b, and the third cell stack 110c. The cell stack 110a includes: a series of cells 112 stacked along the longitudinal axis 102, as well as a pair of stack end plates 130a, 130b, arranged at opposing ends of the series of cells 112 and configured to be fixed to one another in an assembled position. In the example electrical cell module, each series of cells has 12 prismatic cells.

In the assembled position, the pair of stack end plates 130a, 130b apply to the series of cells 112 a compressive force along the longitudinal axis 102. The respective pairs of stack end plates 130a, 130b also define a stack length of each cell stack 110a, 110b, 110c. The compressive force applied to the first cell stack 110a, the compressive force applied to the second cell stack 110b, and the compressive force applied to the third cell stack 110c are each within a predetermined operable range. That is, the compressive force is within an operable compressive force range specified by the manufacturer of the cell.

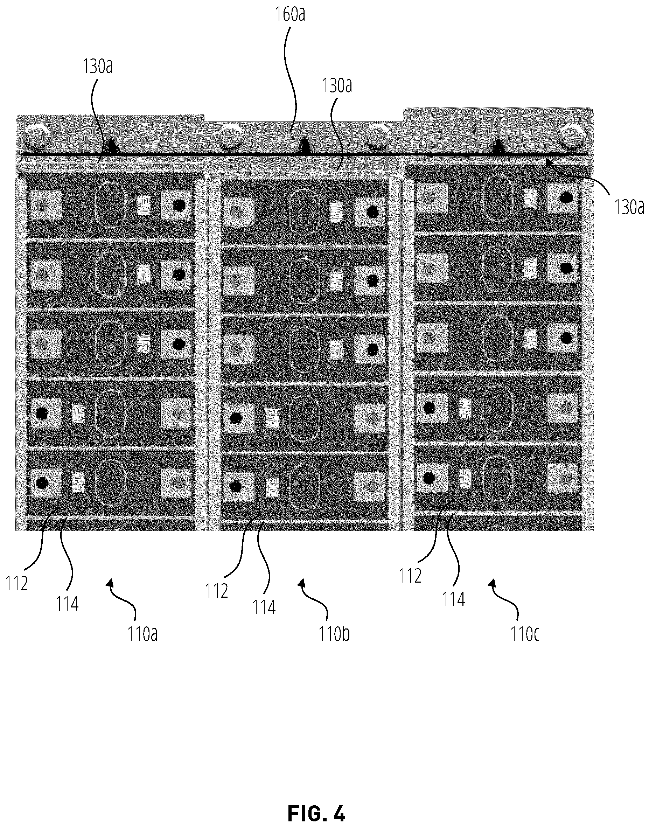

The electrical cell module 100 is configured so that each of the opposing pair of module end plates 160a, 160b is fixedly engaged, in a use position, with one corresponding stack end plate 130a, 130b of each of the first cell stack 110a, the second cell stack 110b and the third cell stack 110c. In the use position, the module end plates 160a, 160b are spaced apart from one another along the longitudinal axis 102 by a predetermined distance, and at least the first stack length is different to the second stack length. In the example, the first stack length is different to the second stack length and different to the third stack length, as shown particularly in FIG. 4.

In the assembled position, each pair of stack end plates 130a, 130b of the three cell stacks 110a, 110b, 110c are fixed to one another via an intermediary pair of support plates 140a, 140b. In this way, each pair of stack end plates 130a, 130b and pair of support plates 140a, 140b cooperatively form a cell stack housing unit. A cell stack housing unit surrounds a perimeter of each cell stack 110a, 110b, 110c.

Each cell 112 includes a perimeter wall disposed perpendicular to the longitudinal axis 102. The pair of support plates 140a, 140b abuts opposing faces of each perimeter wall. The perimeter wall defines a thickness of each cell in the longitudinal direction of the cell stack. The thickness is a nominal thickness, subject to tolerances, prior to any compressive force applied to the cell 112 within the cell stack 110a, 110b, 110c.

The housing unit extends longitudinally and transversely around the respective cells 112. An upper surface of each cell 112 remains exposed so that the cell terminals 116 are accessible for electrically connecting to the cell terminals 116.

Each support plate 140a, 140b extends along the longitudinal axis 102 between a proximal end portion 142 and a distal end portion 141. The proximal end portion 142 has a proximal guide element 144. The distal end portion 141 has a distal guide element 144. Additionally, each of the first stack end plate 130a and the second stack end plate 130b includes a pair of engaging elements 132. The engaging elements 132 are spaced apart from one another in the transverse direction, so that they are arranged on opposing edges of the respective stack end plate 130a, 130b.

The engaging elements 132 are positioned to contactingly engage the corresponding proximal guide element 144 or distal guide element 144 in a pre-assembled position. The pre-assembled position corresponds to a position in which stack end plates 130a, 130b are brought into contact with the cell stack housing unit but without applying a compressive force to the series of cells. The proximal guide elements 144 and the distal guide elements 144 are each configured to guide the corresponding first stack end plate 130a and second stack end plate 130b towards one another along the longitudinal axis 102 from the pre-assembled position to the assembled position.

In the example each guide element 144 includes an inwardly-facing longitudinal surface. Each engaging element 132 is a tab oriented so, that with the stack end plate 130a, 130b engaged with the series of cells, each tab projects away from the series of cells. In this way, each longitudinal surface abuts an outer face of an engaging element 132 to restrict lateral movement of the corresponding as the stack end plate 130a, 130b is moved to the assembled position.

In the assembled position, the first stack end plate 130a is welded to each of the proximal guide elements 144 and the second stack end plate 130b is welded to each of the distal guide elements 144. That is, a weld 136a is provided between each guide element 144 and engaging element 132 to fix the stack end plate 130a, 130b in the assembled position.

The first module end plate 160a and the second module end plate 160b of the pair of module end plates each extend in a transverse direction, perpendicular to the longitudinal axis 102. The first module end plate 160a and the second module end plate 160b each include a series of mount portions 162 spaced along the transverse direction. In the example, a first mount portion 162 includes an outwardly-facing surface. The surface is provided on a vertical plate at each transverse end of the module end plate 160a, 160b. A second mount portion 162 includes an elongate slot 164 through the module end plate 160a, 160b.

Each module end plate 160a, 160b is thereby configured to guide stack end plates 130a, 130b of each cell stack cell stacks 110a, 110b, 110c of differing stack lengths from a pre-use position to a use position.

In the pre-use position, the mount portions 162 of the first module end plate 160a contactingly engages each of the first stack end plates 130a. The mount portions 162 of the second module end plate 160b contactingly engages each of the second stack end plates 130b. The mount portions 162 and the stack end plates are each configured to guide the corresponding first module end plate 160a and second module end plate 160b towards one another along the longitudinal axis, from the pre-use position to the use position.

In particular, the outwardly-facing surface of each first mount portion 162 abuts an engaging element 132 of the cell stack 110a, 110c as the corresponding module end plate 160a is moved from the pre-use position to the use position. Lateral movement of the module end plate 160a is restricted. Also, the elongate slots 164 of each second mount portion 162 abuts engaging elements 132 of the cell stacks 110a, 110b, 110c as the module end plate 160a is moved from the pre-use position to the use position. Lateral movement of the module end plate 160a is restricted.

As shown particularly in FIG. 4, in each case, because at least one component of each abutment, that is one of each abutting engaging element 132 and mount portion 162 extends along the longitudinal axis 102 then the use position accommodates a variable stack length. For a cell stack 110b of minimal length, the module end plate 160a, 160b is guided only a short distance by the cell stack 110b engaging elements 132 until it is in the use position. For a cell stack 110c of maximal length, the module end plate 160a, 160b is guided a further distance by the cell stack 110b engaging elements 132 until it is in the use position. For a cell stack 110a of intermediary length, the module end plate 160a, 160b is guided an intermediary distance by the cell stack 110b engaging elements 132 until it is in the use position.

In the use position, each stack end plate 130a, 130b is welded to the corresponding module end plate 160a, 160b. A weld 136b, shown particularly in FIG. 3, is provided between each engaging element 132 and mount portion 162 to fix the module end plate 160a, 160b in the assembled position.

Each module end plate 160a, 160b is configured to be releasably secured to a pair of fixing points provided on a support body, for example a module enclosure, a vehicle chassis or a module support frame. In the example, the module end plates 160a, 160b include an aperture for receiving a fastener, such as a bolt. As the module end plates 160a, 160b are secured to the cell stacks 110a, 110b, 110c at a predetermined distance, the electrical cell module 100 is reliably and accurately securable to fixing points on the support body spaced apart by the predetermined distance.

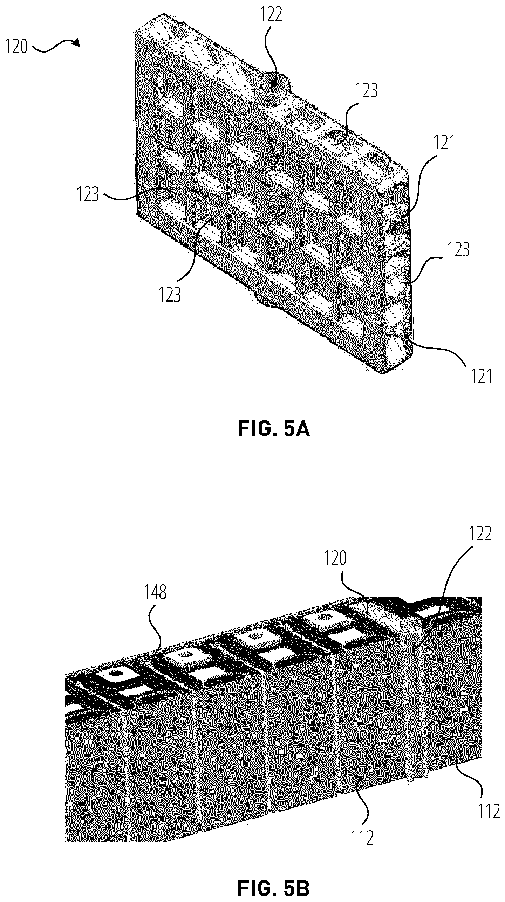

Referring now to FIG. 5A, there is shown a support member 120. Each cell stack 110a, 110b, 110c includes one support member 120 stacked with the respective series of cells 112. The support member 120 is stacked between a pair of cells at a mid-point of the series of cells. The support member 120 is a rigid plate including a number of recesses 123 on its outer surfaces. The recesses 123 reduce the weight of the support member 120 while maintaining its rigidity.

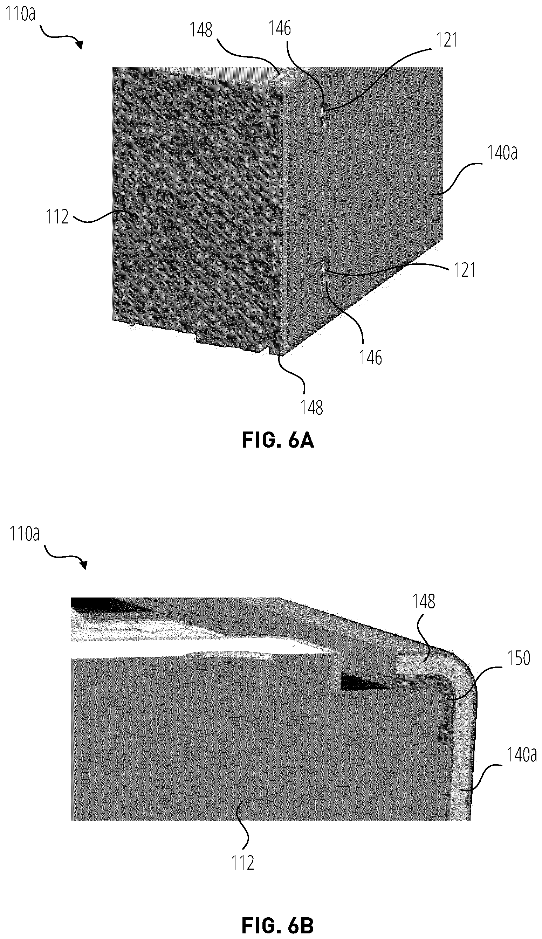

The support member 120 includes a series of registration elements 121. The registration elements 121 are configured to locate with a mutually-compatible locator element 146 on one of the associated support plates 140a, 140b. In the example, the registration elements 121 are provide on opposing side surfaces of the support member 120, to be disposed on the longitudinal faces of the series of cells 112 when stacked. Each registration element 121 is in the form of a protrusion projecting in a transverse direction from the support member 120. The protrusion is sized to receivingly locate within a locator element 146 in a corresponding support plate 140a, 140b. In the example, each locator element 146 is an aperture through the support plate 140a, 140b (shown particularly in FIG. 6A).

In this way, prior completing the assembly of the cell stack 110a, 110b, 110c, each series of cells 112 may by located with the support plates 140a, 140b. The support member 120 ensures the series of cells 112 are centrally located, along the longitudinal axis 102, with each support plate 140a, 140b. The series of cells 112 are accurately registered with the support plates 140a, 140b. Consequently, each stack end plate 130a, 130b is mountable to the series of cells 112 so that the engaging elements 132 contactingly engage the guide elements 144 of the support plates 140a, 140b.

The support member 120 includes a bore 122. The bore 122 is oriented to extend vertically through the support member 120. The bore 122 provides an additional means of securing the electrical cell module 100 to a fixing point provided on a support body, for example a module enclosure, a vehicle chassis or a module support frame. In conjunction with the registration elements 121, the spacing of the support member 120 to the module end plates 160a, 160b is also reliably and accurately set. In addition, one or each bore 122 may provide a datum as a central position of each cell stack. Correspondingly, one or each bore 122 may provide a datum as a central lengthways position on the electrical cell module. For example, the bore 122 may be used as a datum to locate a cover fixed to the electrical cell module.

Referring now to FIG. 6A and FIG. 6B, there is shown a transverse cross-sectional view of a cell stack 110a, including a cell 112 and a support plate 140a. The support plate 140a includes a pair of elongate ribs 148, particularly an upper elongate rib 148 and a lower elongate rib 148. Each elongate rib 148 extends substantially along the length of the support plate 140a.

Each elongate rib 148 is configured to wrap at least partly surround the perimeter wall the cells 112 in the series of cells. In this way, support plate 140a fits onto the series of cells as the cell stack 110a is assembled. In the pre-assembled position, the elongate rib 148 supports the cells 112 within the cell stack 110a housing unit and maintains alignment of each cell 112.

Each elongate rib 148 includes an adhesive layer 150. The adhesive layer 150 is configured to adhere the support plate to the perimeter wall of the cells in the series of cells. The adhesive layer 150 therefore further improves alignment of the cell 112 within the cell stack 110a. The structural integrity of the cell stack 110a is improved, ensuring the electrical cell module 100 is more robust in use.

The electrical cell module 100 may be assembled using a method according to an aspect.

In a first step of the method, there is provided an opposing pair of module end plates 160a, 160b.

In a second step of the method, there is provided a first cell stack 110a, a second cell stack 110b, and a third cell stack 110c. Each of the cell stacks 110a, 110b, 110c includes a series of cells 112 stacked in a longitudinal axis 102, and a pair of stack end plates 130a, 130b arranged at opposing ends of each series of cells 112. Also, for the example electrical cell module 100, the method includes providing each of the cell stacks 110a, 110b, 110c with a respective intermediary pair of support plates 140a, 140b. Each pair of stack end plates 130a, 130b and respective pair of support plates 140a, 140b cooperatively form a stack housing unit. The stack housing unit encloses a perimeter of the cell stack, where the perimeter extends about the longitudinal and transverse directions of the cell stack.

In a third step of the method, a support member 120 is located with the support plates 140a, 140b of each of the cell stacks 110a, 110b, 110c. The support member 120 is stacked with the respective series of cells, as described here with reference to FIG. 5A and FIG. 5B.

In a fourth step of the method, a first stack end plate 130a of each pair of stack end plates is contactingly engaged, in a pre-assembled position, with the distal guide element 144 on each support plate 140a, 140b. Also in the pre-assembled position, a second stack end plate 130b of each pair of stack end plates is contactingly engaged with a proximal guide element 144 on support plate 140a, 140b.

In a fifth step of the method, each pair of stack end plates 130a, 130b is used to apply to the respective series of cells a compressive force in the longitudinal axis 102. In doing so, the distal guide elements 144 and the proximal guide elements 144 guide the first stack end plate 130a and second stack end plate 130b towards one another along the longitudinal axis 102 from the pre-assembled position to the assembled position. That is, the stack end plates 130a, 130b are guided towards one another until the compressive force on each series of cells 112 is within a predetermined operable range.

In a sixth step of the method, the stack end plates 130a, 130b of the first cell stack 110a are fixed in the corresponding assembled position to define a first stack length. Also, the stack end plates 130a, 130b of the second cell stack 110b are fixed in a corresponding assembled position to define a second stack length. Furthermore, the stack end plates 130a, 130b of the third cell stack 110c are fixed in a corresponding assembled position to define a third stack length. The second stack length is different to the first stack length and to the third stack length. In particular, the stack end plates 130a, 130b of each cell stack 110a, 110b, 110c is fixed in the assembled position by welding the stack end plates 130a, 130b to the associated support plates 140a, 140b.

In a seventh step of the method, each of the opposing pair of module end plates 160a, 160b are mounted to the cell stacks 110a, 110b, 110c in a pre-use position. In the pre-use position, the engaging elements 132 of each cell stack 110a, 110b, 110c is contactingly engaged with the mount portion 162 of the corresponding module end plates 160a, 160b. The module end plates 160a, 160b, are guided to a use position by the engaging elements 132. In the use position, the module end plates are spaced apart from one another in the longitudinal axis by a predetermined distance. The module end plates 160a, 160b are then fixed in the use position by welding each mount portion 162 to the corresponding engaging element 132 or engaging elements 132.

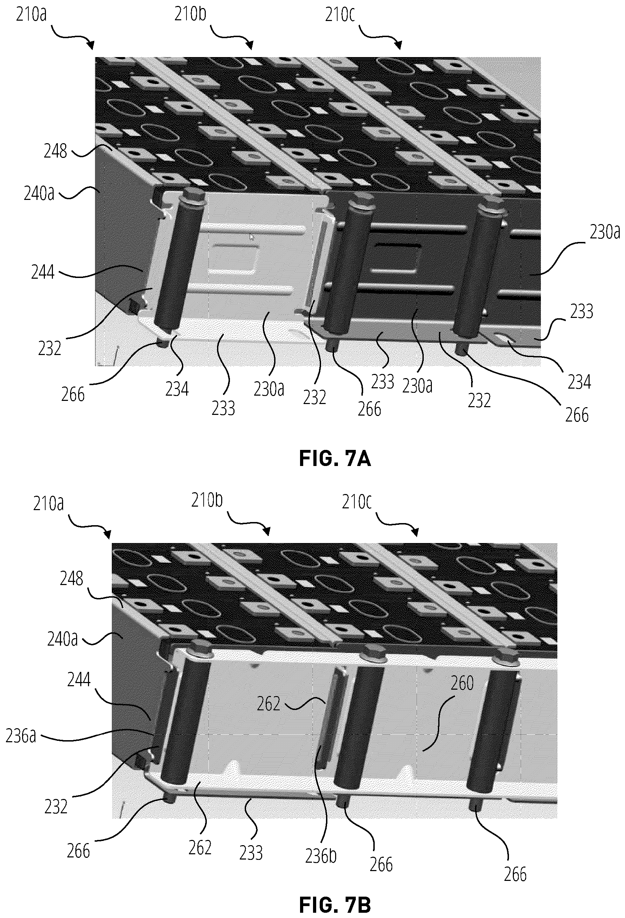

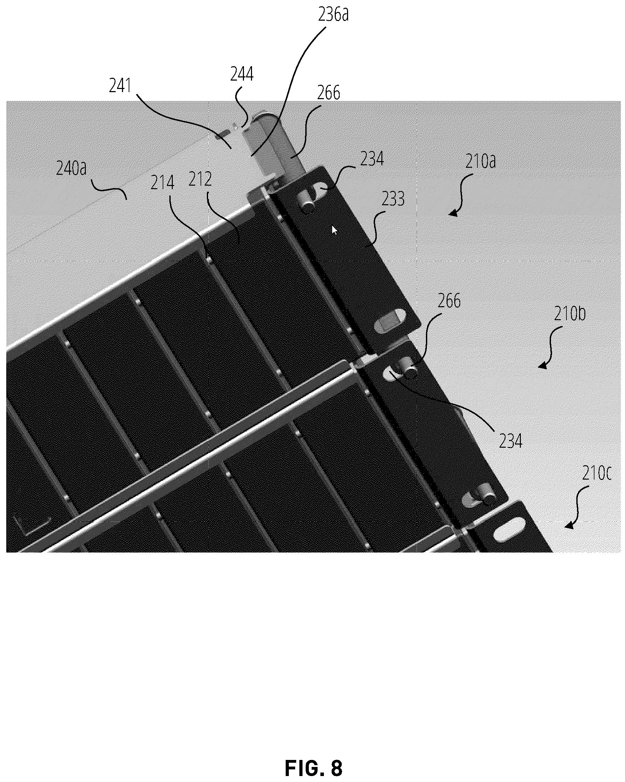

Referring now to FIG. 7A to FIG. 8, there is shown a second example electrical cell module 200. In FIG. 7A, the cell stacks 210a, 210b, 210c of the electrical cell module 200 are shown with only threaded bolts 266 of the module end plate 260 visible. In FIG. 7B and FIG. 8, the threaded bolts 266 are shown mounted to their module end plate 260.

The second example electrical cell module 200 is the same as the first example electrical cell module 100 other than the means of engaging and fixing each cell stack 210a, 210b, 210c to its module end plates 260 is different. Features that are the same as in the earlier example have the same numerals other than the initial number is '2' instead of '1'.

Accordingly, the electrical cell module 200 includes an opposing pair of module end plates 260 spaced apart from one another along a longitudinal axis 202. The electrical cell module 200 includes a first cell stack 210a, a second cell stack 210b, and a third cell stack 210c. Each cell stack 210a, 210b, 210c includes a series of cells 212 stacked along the longitudinal axis 202, and a pair of stack end plates 230a, 230b arranged at opposing ends of the series of cells 212.

The pair of stack end plate 230a, 230b are configured to be fixed to one another in an assembled position wherein, in the assembled position, the pair of stack end plates 230a, 230b apply to the series of cells 212 a compressive force along the longitudinal axis 202, and define a stack length of each cell stack 210a, 210b, 210c. The stack end plates 230a, 230b are fixed to one another via intermediary support plates 240a, 240b. The compressive force applied to each cell stack 210a, 210b, 210c is within a predetermined operable range.

The electrical cell module 200 is configured so that each of the opposing pair of module end plates 260 is fixedly engaged, in a use position, with one corresponding stack end plate 230a, 230b of each cell stack 210a, 210b, 210c. In the use position, the module end plates 260 are spaced apart from one another along the longitudinal axis 202 by a predetermined distance while the first stack length is different to the second stack length.

The cell stacks 210a, 210b, 210c each include engaging elements 232 on the stack end plates 230a, 230b that are fixed to guide elements 244 of the support plates 240a, 240b in an assembled position, as described here for the electrical cell module 100.

The module end plate 260 includes a series of threaded bolts 266 fixed to the module end plate 260. Each threaded bolt 266 extends vertically from an upper end to a lower end. The upper end is fixed to an upper edge of the module end plate 260 so that the threaded bolt 266 is static relative to the module end plate 260. The lower end of each threaded bolt 266 includes a mount portion of the module end plate 260.

Each stack end plate 230a, 230b also includes transverse shelf 233. Each transverse shelf 233 has at least one elongate slot 234, that extends at least in the longitudinal direction. The elongate slot 234 is configured to receive the mount portion of the threaded bolt 266 fixed at the module end plate 260.

The mount portion moves freely along the longitudinal axis 202 within the elongate slot 234. In this way, the module end plate 260 is moveable relative to each stack end plate 230a, 230b from a pre-use position, in which the mount portion is received in the elongate slot 234, to a use position in which the pair of module end plates 260 are spaced apart by a predetermined distance.

With the module end plates 260 spaced apart by the predetermined distance, each module end plate 260 is fixed to each corresponding stack end plate 230a, 230b. In the example shown, each module end plate 260 is fixed, firstly, by a bolt secured to the mount portion of each threaded bolt 266 and clamped to the transverse shelf 233.

In addition, the module end plate 260 also includes mount portions 262 in the form of additional elongate slots 264 oriented vertically for receiving and abutting the engaging elements 232 of one or more cell stacks 210a, 210b, 210c. In this way, each module end plate 260 is also fixed to each corresponding stack end plate 230a, 230b by a weld 236b within each elongate slot 264.

As will be appreciated, one or both of the two means of fixing a module end plate to each corresponding stack end plate may be adopted according to the requirements of an electrical cell module. The module end plate may be secured by clamping threaded bolts to the transverse shelf, or by welding engaging elements within an elongate slot, or by both clamping threaded bolts to the transverse shelf as well as welding engaging elements within an elongate slot. Yet further fixing means, not described here may also be provided within the scope of the invention in order to allow each module end plate to engage with corresponding stack end plates in a pre-use position, and then be guided along the longitudinal axis to a use position for fixing.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. An electrical cell module comprising:
an opposing pair of module end plates spaced apart from one another along a longitudinal axis;
a first cell stack; and
a second cell stack;
wherein each of the first cell stack and second cell stack comprises:
a series of cells stacked along the longitudinal axis, and
a pair of stack end plates, arranged at opposing ends of the series of cells, and configured to be fixed to one another in an assembled position wherein, in the assembled position, the pair of stack end plates apply to the series of cells a compressive force along the longitudinal axis, and define a stack length of the respective cell stack;
wherein the compressive force applied to the first cell stack and the compressive force applied to the second cell stack are each within a predetermined operable range; and
wherein the electrical cell module is configured so that, in a use position, each of the opposing pair of module end plates is fixedly engaged with one corresponding stack end plate of each of the first cell stack and the second cell stack such that:
- the module end plates are spaced apart from one another along the longitudinal axis by a predetermined distance, and
- the first stack length is different to the second stack length.

2. The electrical cell module of claim 1, wherein, in the assembled position, each pair of stack end plates are fixed to one another via an intermediary pair of support plates, so that the pair of stack end plates and the pair of support plates cooperatively form a cell stack housing unit.

3. The electrical cell module of claim 2, wherein each support plate extends along the longitudinal axis between:
a proximal end portion having a proximal guide element; and
a distal end portion having a distal guide element;
wherein, in a pre-assembled position, a first stack end plate of the pair of stack end plates contactingly engages each of the proximal guide elements and a second stack end plate of the pair of stack end plates contactingly engages each of the distal guide elements; and
wherein the proximal guide elements and the distal guide elements are each configured to guide the corresponding first stack end plate and second stack end plate towards one another along the longitudinal axis from the pre-assembled position to the assembled position.

4. The electrical cell module of claim 3, wherein each of the first stack end plate and the second stack end plate include one or more engaging elements arranged to contactingly engage the corresponding proximal guide element or distal guide element in the pre-assembled position.

5. The electrical cell module of any one of claims 2 to 4, wherein each support plate comprises at least one elongate rib configured to wrap at least partly around the perimeter wall of at least a proportion of the cells in the series of cells and, optionally, wherein elongate rib comprises an adhesive layer configured to adhere the support plate to the perimeter wall of at least a proportion of the cells in the series of cells.

6. The electrical cell module of any one of claims 2 to 9, wherein each cell stack comprises a support member stacked with the series of cells, and, optionally, wherein the support member comprises a registration element, and wherein the registration element is configured to locate with a mutually-compatible locator element on one of the associated support plates.

7. The electrical cell module of any one of claims 1 to 6, wherein the predetermined operable range of compressive force is from 1 Newton to 10,000 Newtons.

8. The electrical cell module of any one of claims 1 to 7, wherein a first module end plate and a second module end plate of the pair of module end plates each extend in a transverse direction, perpendicular to the longitudinal axis, and each comprise a series of mount portions along the transverse direction.

9. The electrical cell module of claim 8, wherein, in a pre-use position, the mount portions of the first module end plate contactingly engages each of the first stack end plates and the mount portions of the second module end plate contactingly engages each of the second stack end plates, and
wherein the mount portions and the stack end plates are each configured to guide the corresponding first module end plate and second module end plate towards one another in the longitudinal axis, from the pre-use position to the use position.

10. The electrical cell module of claim 7 or 8, wherein each mount portion comprises a slot configured, in the pre-use position, to receive the engaging elements of the corresponding stack end plates, and / or wherein each mount portion comprises a threaded bolt portion configured, in the pre-use position, to be received in an elongate slot in one of the stack end plates.

11. The electrical cell module of any one of claims 1 to 10, wherein each module end plate is configured to be releasably secured to a pair of fixing points provided on a support body, for example a module enclosure, a vehicle chassis or a module support frame, wherein the fixing points of the pair of fixing points are spaced apart by the predetermined distance.

12. The electrical cell module of any one of claims 1 to 18, the electrical cell module further comprising:
at least one third cell stack comprising:
a series of cells stacked in the longitudinal axis, and
a pair of stack end plates, arranged at opposing ends of the series of cells, and configured to be fixed to one another in an assembled position wherein, in the assembled position, the pair of stack end plates apply to the series of cells a compressive force in the longitudinal axis, and define a third stack length;
wherein the compressive force applied to the third cell stack is within the predetermined operable range; and
wherein the electrical cell module is configured so that each of the opposing pair of module end plates is also fixedly engaged, in the use position, with one corresponding stack end plate of the third cell stack such that:
- the module end plates are spaced apart from one another in the longitudinal axis by the predetermined distance.

13. A method of manufacturing an electrical cell module, the method comprising:
providing an opposing pair of module end plates;
providing a first cell stack and a second cell stack, wherein each of the first cell stack and the second cell stack comprises:
a series of cells stacked in a longitudinal axis, and
a pair of stack end plates arranged at opposing ends of each series of cells;
using each pair of stack end plates to apply to the respective series of cells a compressive force in the longitudinal axis, wherein, when the compressive force on each series of cells is within a predetermined operable range, the pair of stack end plates are in an assembled position;
fixing the stack end plates of the first cell stack in the corresponding assembled position to define a first stack length;
fixing the stack end plates of the second cell stack in a corresponding assembled position to define a second stack length;
and
fixedly engaging, in a use position, each of the opposing pair of module end plates to one corresponding stack end plate of each of the first cell stack and the second cell stack such that the module end plates are spaced apart from one another in the longitudinal axis by a predetermined distance.

14. The method of claim 13, wherein the method comprises providing each of the first cell stack and the second cell stack with a respective intermediary pair of support plates, so that each pair of stack end plates and respective pair of support plates cooperatively form a stack housing unit, and, optionally, wherein the step of fixing the stack end plates of the respective cell stack in the assembled position comprises welding the stack end plates to the associated support plates.

15. The method of claim 14, the method comprising further steps of:
contactingly engaging, in a pre-assembled position, each stack end plate of the pair of stack end plates with either a distal guide element on each of the first cell stack and the second cell stack, or with a proximal guide element on each of the first cell stack and the second cell stack; and
guiding the corresponding first stack end plate and second stack end plate towards one another along the longitudinal axis, from the pre-assembled position to the assembled position.
